# EUROPÄISCHE PATENTSCHRIFT

(11) **EP 3 130 800 B1**
(45) Veröffentlichungstag und Bekanntmachung des Hinweises auf die Patenterteilung: **21.02.2018**
(21) Anmeldenummer: 15180399.6
(22) Anmeldetag: 10.08.2015
(51) Int. Cl.: F03D 80/30

(54) **WINDENERGIEANLAGENROTORBLATT MIT EINER FUNKENSTRECKE**
WIND ENERGY ASSEMBLY ROTOR BLADE WITH A SPARK GAP
PALE DE ROTOR D'EOLIENNE DOTEE D'UN ECLATEUR A ETINCELLE

(43) Veröffentlichungstag der Anmeldung: 15.02.2017
(73) Patentinhaber: Nordex Energy GmbH, 22419 Hamburg (DE)
(72) Erfinder: Lipka, Thomas, 18055 Rostock (DE); Kremer, Jochen, 22299 Hamburg (DE)
(74) Vertreter: Hauck Patentanwaltspartnerschaft mbB

(56) Entgegenhaltungen:
- EP-A1- 2 806 160
- WO-A1-00/79128
- WO-A1-2012/055418
- DE-A1-102005 045 579

## Beschreibung

Die Erfindung betrifft ein Windenergieanlagenrotorblatt mit einem Blitzschutzrezeptor, einer ersten elektrischen Leitung und einer Potentialausgleichseinrichtung, die eine erste Elektrode, die mit dem Blitzschutzrezeptor verbunden ist, und eine zweite Elektrode, die mit der ersten elektrischen Leitung verbunden ist, aufweist, wobei zwischen den beiden Elektroden eine Funkenstrecke ausgebildet ist.

Es ist bekannt, Windenergieanlagenrotorblätter mit einer Blitzschutzeinrichtung vor Schäden durch Blitzschlag zu bewahren. Hierzu wird in der Regel im Bereich der Blattspitze ein Blitzschutzrezeptor angeordnet. Der Strom eines in den Blitzschutzrezeptor einschlagenden Blitzes wird dann über einen Blitzschutzleiter zur Blattwurzel hin und von dort über die Gondel und den Turm der Windenergieanlage in den Erdboden abgeleitet. Sind in dem Windenergieanlagenrotorblatt mehrere elektrisch leitfähige Elemente mehr oder weniger parallel angeordnet, kommt es durch elektromagnetische Induktion bei einem Blitzschlag zu großen Potentialdifferenzen zwischen den elektrisch leitfähigen Elementen, die zu Überschlägen oder gar zur Zerstörung des Windenergieanlagenrotorblatts führen können. Es ist bekannt, derartigen Überschlägen durch Potentialausgleichselemente entgegenzuwirken.

Ein solcher Potentialausgleich ist insbesondere erforderlich, wenn eines der elektrisch leitfähigen Elemente eine elektrische Heizeinrichtung zum Enteisen der Oberfläche des Windenergieanlagenrotorblattes ist. Diese Heizeinrichtungen sind mit einer Stromversorgung versehen und müssen im Betrieb elektrisch vom Blitzschutzsystem getrennt sein. Hierzu können im Inneren des Rotorblatts Funkenstrecken zwischen der Heizeinrichtung und der Blitzschutzeinrichtung vorgesehen sein, wie in der Druckschrift WO 00/79128 A1 gezeigt. Diese Funkenstrecken werden im Fall eines Blitzschlages überbrückt und stellen einen Potentialausgleich zwischen der Heizeinrichtung und der Blitzschutzeinrichtung her.

Die Druckschrift WO 2014/023734 A1 zeigt ein Windenergieanlagenrotorblatt mit einer elektrischen Heizeinrichtung und einem Blitzschutzleiter. Die Heizeinrichtung und der Blitzschutzleiter sind über die Länge des Rotorblatts an mehreren Stellen über Funkenstrecken miteinander verbunden. Die Funkenstrecken sind im Inneren des Rotorblatts in Kombination mit den Blitzschutzrezeptoren angeordnet. Die Druckschrift WO 2012/055418 A1 zeigt ein Windenergieanlagenrotorblatt mit Funkenstrecken am Äußeren des Rotorblatts. Um die Betriebssicherheit der Blitzschutzeinrichtung zu gewährleisten, muss die Funktionsfähigkeit der Funkenstrecken regelmäßig überprüft werden. Insbesondere im Blattspitzenbereich angeordnete Funkenstrecken sind dabei nur sehr schwer zugänglich.

Davon ausgehend ist es Aufgabe der Erfindung, ein Windenergieanlagenrotorblatt mit einer Potentialausgleichseinrichtung zur Verfügung zu stellen, das einfacher in einem betriebssicheren Zustand gehalten werden kann.

Diese Aufgabe wird gelöst durch das Windenergieanlagenrotorblatt mit den Merkmalen des Anspruchs 1. Vorteilhafte Ausgestaltungen sind in den sich anschließenden Unteransprüchen angegeben.

Das Windenergieanlagenrotorblatt hat einen Blitzschutzrezeptor, eine erste elektrische Leitung und eine Potentialausgleichseinrichtung, die eine erste Elektrode, die mit dem Blitzschutzrezeptor verbunden ist, und eine zweite Elektrode, die mit der ersten elektrischen Leitung verbunden ist, aufweist, wobei zwischen den beiden Elektroden eine Funkenstrecke ausgebildet ist und einander zugewandte Seiten der beiden Elektroden einen Strömungskanal bilden, der so angeordnet ist, dass er von der im Betrieb des Windenergieanlagenrotorblatts anströmenden Umgebungsluft durchströmt wird.

Der Blitzschutzrezeptor kann insbesondere an oder nahe einer Blattspitze des Windenergieanlagenrotorblatts angeordnet sein, aber auch in einem größeren Abstand davon, auch in Kombination mit einem oder mehreren weiteren Blitzschutzrezeptoren. Er besteht in der Regel aus Metall, beispielsweise aus Kupfer oder Aluminium, und bietet eine an der Außenseite des Windenergieanlagenrotorblatts freiliegende Fläche, in die ein Blitz einschlagen kann.

Die erste elektrische Leitung kann ein Blitzschutzleiter sein oder eine sonstige elektrische Leitung, beispielsweise eine Versorgungsleitung, mit der einem in oder an dem Windenergieanlagenrotorblatt angeordneten, elektrischen Verbraucher elektrische Energie zugeführt werden kann, oder eine Signalleitung, über die elektrische Signale beispielsweise von einem in oder an dem Windenergieanlagenrotorblatt angeordneten Sensor übertragen werden können. Die erste elektrische Leitung kann so dimensioniert sein, dass sie im Falle eines Blitzschlags, bei dem es zu einem Potentialausgleich über die Funkenstrecke kommt, einen Blitzstrom ganz oder teilweise tragen kann, insbesondere bis zu einer Blattwurzel. In diesem Sinne kann es sich bei der ersten elektrischen Leitung um einen Blitzschutzleiter handeln, auch wenn die erste elektrische Leitung im normalen Betrieb des Windenergieanlagenrotorblatts eine andere Funktion erfüllt. Die erste elektrische Leitung ist von dem Blitzschutzrezeptor galvanisch getrennt. Erst im Falle eines Blitzschlags kommt es zu einem Potentialausgleich über die Funkenstrecke.

Bei der Verbindung der ersten Elektrode mit dem Blitzschutzrezeptor und/oder bei der Verbindung der zweiten Elektrode mit der ersten elektrischen Leitung kann es sich um eine mittelbare oder unmittelbare Verbindung handeln. Beispielsweise kann diese Verbindung einen starren elektrischen Leiter, ein mehr oder weniger flexibles Kabel und/oder eine Schraubverbindung enthalten.

Die beiden Elektroden sind bevorzugt massive Metallteile, insbesondere bestehend aus Kupfer. Die beiden Elektroden sind in einem Abstand voneinander angeordnet, der so bemessen ist, dass es bei den bei einem Blitzschlag auftretenden, hohen Potentialdifferenzen zu einem Überschlag kommt, wobei der Abstand gleichzeitig eine ausreichende elektrische Isolation für die im normalen Betrieb des Windenergieanlagenrotorblatts auftretenden Potentialdifferenzen gewährleistet. Typischerweise kann der Abstand zwischen den beiden Elektroden in der Größenordnung von etwa einem oder mehreren Zentimetern liegen. Die beiden einander zugewandten Seiten der Elektroden können parallel zueinander ausgerichtete Flächen aufweisen, aber auch in einem Winkel zueinander angeordnet sein.

Bei der Erfindung bilden die einander zugewandten Seiten der beiden Elektroden einen Strömungskanal, der so angeordnet ist, dass er von der im Betrieb des Windenergieanlagenrotorblatts anströmenden Umgebungsluft durchströmt wird. Der Strömungskanal zwischen den beiden Elektroden ist ein Freiraum, der von der Umgebungsluft durchströmt wird. Er wird seitlich ganz oder teilweise von den beiden Elektroden begrenzt und kann zu einer oder mehreren weiteren Seiten offen oder von anderen Elementen, beispielsweise einer Außenseite des Windenergieanlagenrotorblatts, begrenzt sein. Kommt es infolge eines Blitzschlags zu einem Überschlag zwischen den beiden Elektroden, bildet sich zwischen den beiden einander zugewandten Seiten der Elektroden ein Lichtbogen aus, der den Strömungskanal kreuzt und im Wesentlichen quer zu einer Strömungsrichtung in dem Strömungskanal ausgerichtet ist.

Die Ausbildung eines Strömungskanals zwischen den beiden Elektroden hat zwei die dauerhafte und einwandfreie Funktionsfähigkeit der Funkenstrecke fördernde Wirkungen: Zum einen bewirkt die Durchströmung des Strömungskanals einen Selbstreinigungseffekt. Feuchtigkeit oder Partikel werden durch die hohen Strömungsgeschwindigkeiten weitgehend selbsttätig entfernt. Zum anderen verhindert die Luftströmung im Strömungskanal, dass ein infolge eines Blitzschlags übergesprungener Funken von einer Potentialdifferenz zwischen dem Blitzschutzrezeptor und der ersten elektrischen Leitung aufrechterhalten wird. Dies kann passieren, wenn die Potentialdifferenz zwischen den beiden Elektroden im normalen Betrieb höher ist als die Lichtbogenspannung. Dabei ist die Lichtbogenspannung durch die Ionisation der Luft wesentlich geringer als die für einen Überschlag erforderliche Zündspannung. Die starke Luftströmung kühlt den Lichtbogen und führt ihn in Richtung des Strömungskanals nach hinten, was zu einem zuverlässigen Erlöschen des Funkens/Lichtbogens führt.

In einer Ausgestaltung ist der Strömungskanal an einer der anströmenden Umgebungsluft ausgesetzten Außenseite des Windenergieanlagenrotorblatts angeordnet. Insbesondere kann der Strömungskanal auf seiner von der Außenseite des Windenergieanlagenrotorblatts abgewandten Seite offen sein, sodass er von außen unmittelbar zugänglich ist. Grundsätzlich kann der Strömungskanal auch ganz oder teilweise in das Windenergieanlagenrotorblatt integriert sein. Eine außenliegende Anordnung führt jedoch zu einer besonders wirksamen Durchströmung des Strömungskanals und vereinfacht den Zugang zu Wartungs- und Reparaturzwecken.

In einer Ausgestaltung ist der Strömungskanal an einer Druckseite des Windenergieanlagenrotorblatts angeordnet. Grundsätzlich kann der Strömungskanal auch an der Saugseite angeordnet sein. Im Betrieb des Windenergieanlagenrotorblatts bilden sich an der Druckseite jedoch besonders stabile Strömungsverhältnisse aus, da Turbulenzen oder Strömungsablösungen kaum auftreten. Der Strömungskanal wird daher an der Druckseite bei unterschiedlichen Betriebsbedingungen besonders wirksam durchströmt.

In einer Ausgestaltung weist der Strömungskanal eine Längsrichtung auf, die in Richtung der anströmenden Umgebungsluft ausgerichtet ist. Diese Maßnahme begünstigt ebenfalls eine gleichmäßige Durchströmung des Strömungskanals.

In einer Ausgestaltung weitet sich der Strömungskanal in Richtung der ihn durchströmenden Luft auf. Dabei vergrößert sich der Abstand zwischen der ersten Elektrode und der zweiten Elektrode in Richtung der den Strömungskanal durchströmenden Luftströmung. Nach dem Zünden eines Lichtbogens bewirkt diese Strömung ein Wandern des Lichtbogens. Mit größer werdendem Abstand zwischen den Elektroden erhöht sich die Lichtbogenspannung, was zu einem Erlöschen des Funkens führt, sobald die Lichtbogenspannung über der Potentialdifferenz zwischen den beiden Elektroden liegt. Dadurch wird das Erlöschen des Funkens noch zuverlässiger erreicht.

In einer Ausgestaltung weisen die erste Elektrode und/oder die zweite Elektrode eine scheibenförmige Grundform auf. Insbesondere können sie aus einer Metallplatte mit im Wesentlichen gleichmäßiger Stärke bestehen. Dadurch können die Elektroden besonders einfach befestigt werden, insbesondere an einer Außenseite des Windenergieanlagenrotorblatts, wobei sie eine ausreichende Stromtragfähigkeit aufweisen und die Strömungsverhältnisse am Rotorblatt relativ wenig beeinflussen.

In einer Ausgestaltung weisen die erste Elektrode und/oder die zweite Elektrode eine an der Außenseite des Windenergieanlagenrotorblatts anliegende Unterseite und eine oder mehrere, relativ zu der Unterseite schräg angeordnete Seitenflächen auf. Mit zunehmendem Abstand von der Unterseite können sich die Abmessungen der Elektroden durch die schräg angeordneten Seitenflächen verkleinern. Schräg angeordnete Seitenflächen sind aerodynamisch vorteilhaft. Auch die einander zugewandten Seiten der beiden Elektroden können schräg angeordnet sein, sodass der zwischen ihnen gebildete Strömungskanal im Querschnitt im Wesentlichen trapezförmig ist.

In einer Ausgestaltung weist das Windenergieanlagenrotorblatt eine elektrische Heizeinrichtung auf und die erste elektrische Leitung ist eine Versorgungsleitung, über die die elektrische Heizeinrichtung mit einem Heizstrom versorgt werden kann. In diesem Fall ermöglicht die galvanische Trennung zwischen der ersten elektrischen Leitung und dem Blitzschutzrezeptor, der in der Regel über einen Blitzschutzleiter geerdet ist, eine zuverlässige Bestromung der Heizeinrichtung. Gleichzeitig werden Beschädigungen an der Versorgungsleitung oder an der elektrischen Heizeinrichtung durch den im Falle eines Blitzschlags eintretenden Potentialausgleich vermieden.

In einer Ausgestaltung weist das Windenergieanlagenrotorblatt einen Blitzschutzleiter auf, der mit dem Blitzschutzrezeptor verbunden ist und zu einer Blattwurzel führt. Der Blitzschutzleiter ist eine zweite elektrische Leitung und kann gegebenenfalls, wie die erste elektrische Leitung auch, eine Zusatzfunktion erfüllen, etwa als Versorgungs- oder Signalleitung. Hierzu kann der Blitzschutzleiter nötigenfalls galvanisch vom Erdpotential getrennt sein, beispielsweise unter Verwendung einer weiteren Funkenstrecke oder eines sonstigen Überspannungsableiters.

In einer Ausgestaltung ist der Blitzschutzleiter an der Saugseite des Windenergieanlagenrotorblatts angeordnet und mit der ersten Elektrode über ein im Inneren des Windenergieanlagenrotorblatts angeordnetes, elektrisches Verbindungsstück, das von der Saugseite zu der ersten Elektrode führt, verbunden. Dies ermöglicht eine zuverlässige elektrische Verbindung zwischen dem Blitzschutzleiter und einer an der Druckseite angeordneten ersten Elektrode. Das elektrische Verbindungsstück kann insbesondere beim Verbinden einer druckseitigen und einer saugseitigen Rotorblatthalbschale montiert werden, wobei der Blitzschutzleiter bereits vorher in die saugseitige Halbschale integriert werden kann.

In einer Ausgestaltung ist der Blitzschutzleiter an einer Saugseite des Windenergieanlagenrotorblatts angeordnet und mit der ersten Elektrode über eine an einer Außenseite des Windenergieanlagenrotorblatts angeordnete Stromschiene verbunden. Mit Hilfe einer solchen Stromschiene kann ebenfalls eine zuverlässige elektrische Verbindung zwischen dem Blitzschutzleiter an der Saugseite und einer auf der Druckseite angeordneten ersten Elektrode hergestellt werden, insbesondere nach dem Verbinden zweier Rotorblatthalbschalen.

In einer Ausgestaltung ist die Stromschiene um eine Profilendkante des Windenergieanlagenrotorblatts herumgeführt. Dadurch wird eine unerwünschte Wechselwirkung zwischen der Stromschiene und einer vorwiegend im Bereich einer Profilnasenkante angeordneten, elektrischen Heizeinrichtung vermieden.

In einer Ausgestaltung ist die erste Elektrode von einem von dem Blitzschutzleiter entfernten Ende der Stromschiene gebildet. Stromschiene und erste Elektrode sind somit ein einheitliches Bauteil. Beispielsweise kann die Stromschiene aus einem massiven Metallstreifen oder -band hergestellt sein. Die Fertigung einer gesonderten, ersten Elektrode kann entfallen, ebenso wie das Herstellen einer Verbindung zwischen der ersten Elektrode und der Stromschiene.

In einer Ausgestaltung ist ein Oberflächenbereich an der Außenseite des Windenergieanlagenrotorblatts, in dem die beiden Elektroden angeordnet sind, mit einer hitzebeständigen Beschichtung versehen. Die Beschichtung dient beim Zünden der Funkenstrecke als Schutzschicht für das Material der Rotorblattschale (zum Beispiel ein Glasfaserlaminat) und kann beispielsweise aus Keramik oder Teflon bestehen.

Die Erfindung wird nachfolgend anhand von in Figuren dargestellten Ausführungsbeispielen näher erläutert. Es zeigen:
- Fig. 1: ein aus dem Stand der Technik bekanntes Rotorblatt in einer vereinfachten, perspektivischen Darstellung,
- Fig. 2a-c: Detaildarstellungen von erfindungsgemäßen Funkenstrecken in drei Ausführungsformen,
- Fig. 3: den Blattspitzenbereich eines ersten erfindungsgemäßen Windenergieanlagenrotorblatts in einer Ansicht auf die Druckseite,
- Fig. 4: den Blattspitzenbereich aus Figur 3 in einer Schnittdarstellung entlang der in Figur 3 mit A-A bezeichneten Ebene von der Profilnasenkante aus gesehen,
- Fig. 5: den Blattspitzenbereich eines zweiten erfindungsgemäßen Windenergieanlagenrotorblatts in einer Ansicht auf die Druckseite,
- Fig. 6: den Blattspitzenbereich aus Figur 5 in einer Schnittdarstellung entlang der in Figur 5 mit B-B bezeichneten Ebene von der Blattspitze aus gesehen,
- Fig. 7: den Blattspitzenbereich eines dritten erfindungsgemäßen Windenergieanlagenrotorblatts in einer Ansicht auf die Druckseite und
- Fig. 8: den Blattspitzenbereich aus Figur 7 in einer Schnittdarstellung entlang der in Figur 7 mit C-C bezeichneten Ebene von der Blattspitze aus gesehen.

Alle Figuren sind schematische Darstellungen und verwenden für einander entsprechende Elemente die gleichen Bezugszeichen.

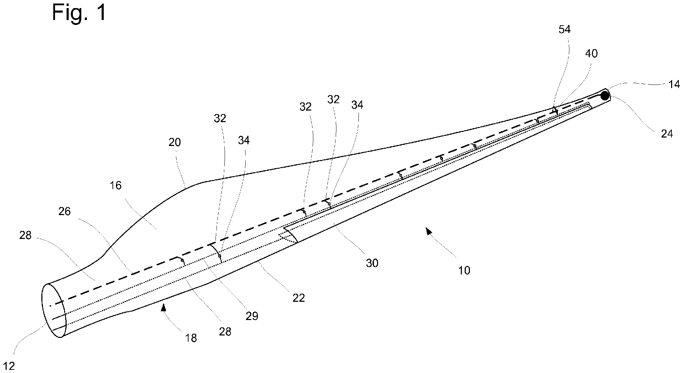

Die Figur 1 zeigt ein aus dem Stand der Technik bekanntes Windenergieanlagenrotorblatt 10 mit einer elektrischen Heizeinrichtung 30. Das Windenergieanlagenrotorblatt 10 hat eine Blattwurzel 12 und eine Blattspitze 14. In der Figur 1 ist der Blick im Wesentlichen auf die Druckseite 16 gerichtet. Auf der vom Betrachter abgewandten Seite hat das Windenergieanlagenrotorblatt 10 eine Saugseite 18.

Das Windenergieanlagenrotorblatt 10 hat eine Profilendkante 20 und eine Profilnasenkante 22. Im Bereich der Blattspitze 14 ist ein Blitzschutzrezeptor 24 angeordnet, der mit einem gestrichelt angedeuteten Blitzschutzleiter 26 elektrisch leitend verbunden ist. Über den Blitzschutzleiter 26 kann der Strom eines in den Blitzschutzrezeptor 24 einschlagenden Blitzes in Richtung zur Blattwurzel 12 hin abgeleitet werden.

Das Windenergieanlagenrotorblatt 10 weist eine in Längsrichtung vom Strom durchflossene, elektrische Heizeinrichtung 30 auf, welche an ihrem blattwurzelseitigen Ende und an ihrem blattspitzenseitigen Ende jeweils mit einem Stromversorgungskabel 28, 29 verbunden ist. Zwischen der Heizeinrichtung 30 und dem Blitzschutzleiter 26 sowie zwischen den Stromversorgungskabeln 28, 29 und dem Blitzschutzleiter 26 befinden sich Potentialausgleichsverbindungen 32, die jeweils eine zwischengeschaltete Funkenstrecke 34 aufweisen. Im Bereich der Rotorblattspitze ist eine auf der Rotorblattoberfläche liegende erfindungsgemäße Potentialausgleichsvorrichtung angeordnet, welche als Stromschiene 54 mit zwei Elektroden ausgebildet ist, zwischen denen sich eine Funkenstrecke 40 befindet. Im normalen Betrieb sind die Heizeinrichtung 30 und der Blitzschutzleiter 26 galvanisch voneinander getrennt, um das Abfließen des Heizstroms über den Blitzschutzleiter 26 zu verhindern. Im Fall eines Blitzschlags werden die Funkenstrecken 34, 40 vom Blitzstrom gezündet und es erfolgt ein Potentialausgleich zwischen den parallelen Leitern.

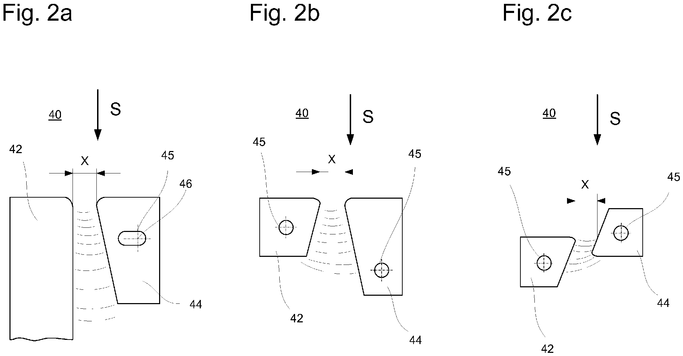

In den Figuren 2a-c sind Detaildarstellungen von drei Ausführungsformen erfindungsgemäßer, außenliegender Funkenstrecken 40 zu sehen. Die Funkenstrecken 40 bestehen in allen drei Ausführungsformen aus einer ersten Elektrode 44 und einer zweiten Elektrode 42. Jede der beiden Elektroden 42, 44 wird über ein Befestigungsmittel 46 mit einem Blitzschutzleiter oder einem anderen elektrischen Leiter (in Figur 2 nicht dargestellt) verbunden. Bei der Ausführungsform nach Fig. 2a befindet sich die Kontaktstelle mit dem elektrischen Leiter am anderen Ende der Stromschiene (nicht dargestellt). Bei den Befestigungsmitteln 46 kann es sich zum Beispiel um Gewindebolzen handeln, die in die Bohrungen 45 in den Elektroden 42, 44 eingesetzt werden können. Auf diese Weise können die Elektroden 42, 44 auch an einem Windenergieanlagenrotorblatt 10 befestigt werden. Wie in Fig. 2a beispielhaft dargestellt, können die Bohrungen 45 auch als Langloch ausgebildet sein, um den Abstand X zwischen den Elektroden 42, 44 einstellen zu können.

Die Elektroden 42, 44 werden an einer Außenseite des Windenergieanlagenrotorblatts 10, auf der Oberfläche, angeordnet, bevorzugt an der Druckseite, da diese weniger anfällig für aerodynamische Störungen ist. Der Abstand X zwischen den Elektroden 42, 44 ist so bemessen, dass die Funkenstrecke nur beim Auftreten hoher Spannungen, wie sie bei einem Blitzschlag auftreten, zündet. Bei niedrigen Spannungen, wie sie beispielsweise zur Versorgung einer Heizeinrichtung verwendet werden, zündet die Funkenstrecke nicht und die beiden Elektroden 42, 44 bleiben elektrisch voneinander getrennt.

Die Elektroden 42, 44 können so positioniert werden, dass der Spalt zwischen den Elektroden parallel zur Anströmrichtung S verläuft. Auf diese Weise kann der Zwischenraum zwischen den Elektroden ständig von anhaftenden Partikeln, wie Sand oder Staub, befreit werden.

Zwischen den einander zugewandten Seiten der Elektroden 42, 44 ist ein Strömungskanal gebildet, der von der anströmenden Luft durchströmt wird. Der Strömungskanal ist an einer Seite von der druckseitigen Oberfläche des Windenergieanlagenrotorblatts 10 begrenzt. Die einander zugewandten Seiten der Elektroden 42, 44 bilden seitliche Begrenzungen des Strömungskanals. An der von der Oberfläche des Windenergieanlagenrotorblatts 10 abgewandten Seite ist der Strömungskanal offen, ebenso vorn und hinten, wo die anströmende Luft ein- bzw. ausströmen kann. Der Strömungskanal weist eine Längsrichtung auf, die im Wesentlichen der Anströmrichtung S entspricht.

Des Weiteren sind die Elektroden 42, 44 geometrisch so gestaltet, dass sich der Abstand X zwischen den gegenüberliegenden Kanten der Elektroden und somit die Länge der Funkenstrecke in Anströmrichtung S vergrößert. Der von den Elektroden 42, 44 gebildete Strömungskanal weitet sich in Strömungsrichtung entsprechend auf. Durch die senkrecht zur Funkenstrecke verlaufende Luftströmung und den sich vergrößernden Abstand X wird nach dem Zünden des Lichtbogens ein Wandern des Lichtbogens in Anströmrichtung S hervorgerufen. Mit größer werdendem Abstand zwischen den Elektroden 42, 44 erhöht sich die Lichtbogenspannung, was zu einem Erlöschen des Funkens führt, sobald die Lichtbogenspannung über der anliegenden Netzspannung (die zum Beispiel zum Betrieb einer Heizeinrichtung vorgesehen ist) liegt. Zudem führt die Strömung entlang der Funkenstrecke zu einer Kühlung des Lichtbogens, was eine weitere Erhöhung der Lichtbogenspannung bewirkt.

In den Figuren 2a-c haben die Elektroden 42, 44 jeweils eine scheiben- oder plattenförmige Grundform. In Figur 2a weist die zweite Elektrode 42 eine in etwa rechteckige Form auf, während die erste Elektrode 44 trapezförmig ist. Durch die zur zweiten Elektrode 42 weisende, schräge Kante der ersten Elektrode 44 erweitert sich der Spalt X zwischen den Elektroden 42, 44 in Strömungsrichtung.

In Figur 2b weisen beide Elektroden 42, 44 eine trapezförmige Gestalt auf. Die schrägen Seiten der Trapeze stehen einander gegenüber, so dass wiederum ein sich in Anströmrichtung S verbreiternder Spalt entsteht. Da beide Seiten schräg verlaufen, nimmt die Breite des Spalts schneller zu als im Beispiel der Figur 2a.

Figur 2c zeigt eine dritte Ausführungsform einer erfindungsgemäßen Funkenstrecke. Die trapezförmigen Elektroden 42, 44 sind doppelt gespiegelt (punktsymmetrisch) zueinander angeordnet. In einem Überlappungsbereich entsteht ein etwa in Anströmrichtung S verlaufender Strömungskanal. Durch das Maß der Überlappung kann der Bereich, in dem die Funkenstrecke zündet, gezielt eingestellt werden.

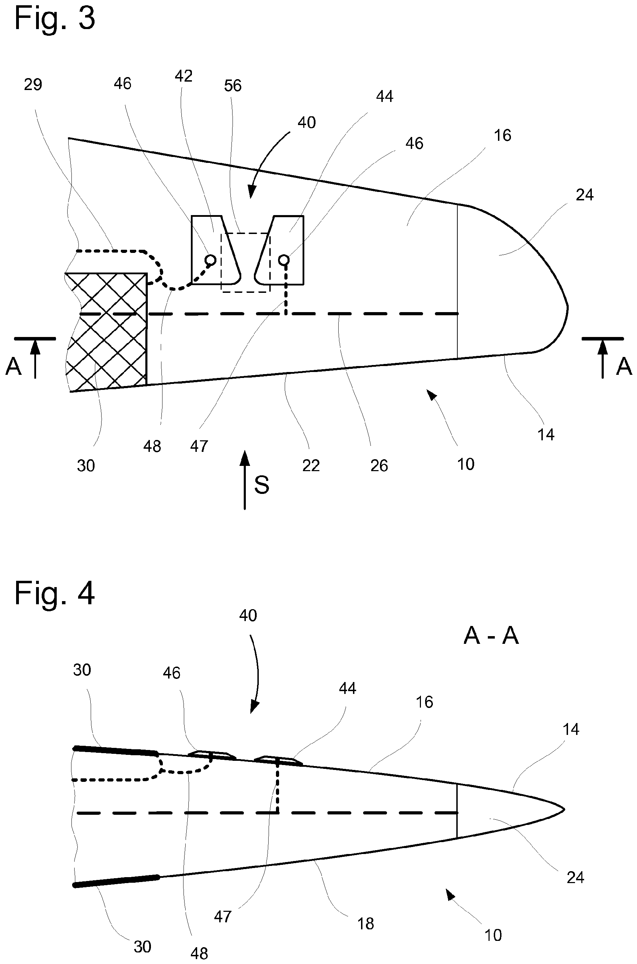

In der Figur 3 ist schematisch der blattspitzennahe Bereich eines erfindungsgemäßen Windenergieanlagenrotorblatts 10 mit Blick auf die Druckseite 16 dargestellt. Das Windenergieanlagenrotorblatt 10 wird von der Nasenkante 22 her angeströmt. Die Anströmrichtung S ist durch einen Pfeil gekennzeichnet.

Das Rotorblatt ist mit einer elektrischen Heizeinrichtung 30 versehen, die über ein Stromversorgungskabel 29 mit elektrischem Strom versorgt wird. Das Stromversorgungskabel 29 ist ein Beispiel einer ersten elektrischen Leitung und ist mit einem blattspitzenseitigen Ende der elektrischen Heizeinrichtung 30 verbunden.

Das Windenergieanlagenrotorblatt 10 weist an der Blattspitze 14 einen Blitzschutzrezeptor 24 auf, welcher mit einem Blitzschutzleiter 26, der zur Blattwurzel 12 führt, verbunden ist. Auf der Druckseite 16 des Windenergieanlagenrotorblatts 10 befindet sich eine außenliegende Funkenstrecke 40 mit einer ersten Elektrode 44 und einer zweiten Elektrode 42. Die einander zugewandten Seiten der beiden Elektroden 42, 44 sind beide schräg zur Anströmrichtung S angeordnet, so dass sich der Spalt zwischen den Elektroden 42, 44 bzw. die Breite X des von ihnen gebildeten Strömungskanals in Strömungsrichtung stark aufweitet. Ein nach einem Blitzschlag möglicher Folgestrom in der Funkenstrecke 40 verlischt daher sicher.

Ein in der Figur 3 von einer gestrichelten Linie umrandeter Oberflächenbereich 56 des Windenergieanlagenrotorblatts 10 ist mit einer hitzebeständigen Beschichtung versehen, um eine Beschädigung des darunterliegenden Materials der Windenergieanlagenrotorblatts 10 durch Hitzeeinwirkung zu verhindern. In dem Oberflächenbereich 56 sind die beiden Elektroden angeordnet.

Ein erstes Verbindungskabel 47 ist über ein Befestigungsmittel 46 an der ersten Elektrode 44 befestigt und verbindet diese mit dem Blitzschutzleiter 26. Ein zweites Verbindungskabel 48 ist über ein Befestigungsmittel 46 an der zweiten Elektrode 42 befestigt und verbindet diese mit dem Stromversorgungskabel 29 der elektrischen Heizeinrichtung 30. Im normalen Heizbetrieb ist die elektrische Heizeinrichtung 30 von dem Blitzschutzleiter 26 galvanisch getrennt. Im Fall eines Blitzschlags wird zwischen der ersten und der zweiten Elektrode (44, 42) eine Funkenstrecke gezündet und es entsteht ein Potentialausgleich zwischen dem Blitzschutzleiter 26 und dem Stromversorgungskabel 29.

Zur besseren Veranschaulichung zeigt die Figur 4 den Blattspitzenbereich aus Fig. 3 entlang dem Schnitt A-A von der Profilnasenkante 22 aus gesehen. Die Anströmrichtung S verläuft in die Betrachtungsebene hinein. Das erste Verbindungskabel 47 ist ein elektrisches Verbindungsstück, das auch als feste, leitfähige Verbindungsbasis ausgebildet sein kann. Diese Lösung ermöglicht eine einfache Kontaktierung nach dem Verbinden zweier Rotorblatthalbschalen bei der Fertigung des Windenergieanlagenrotorblatts 10.

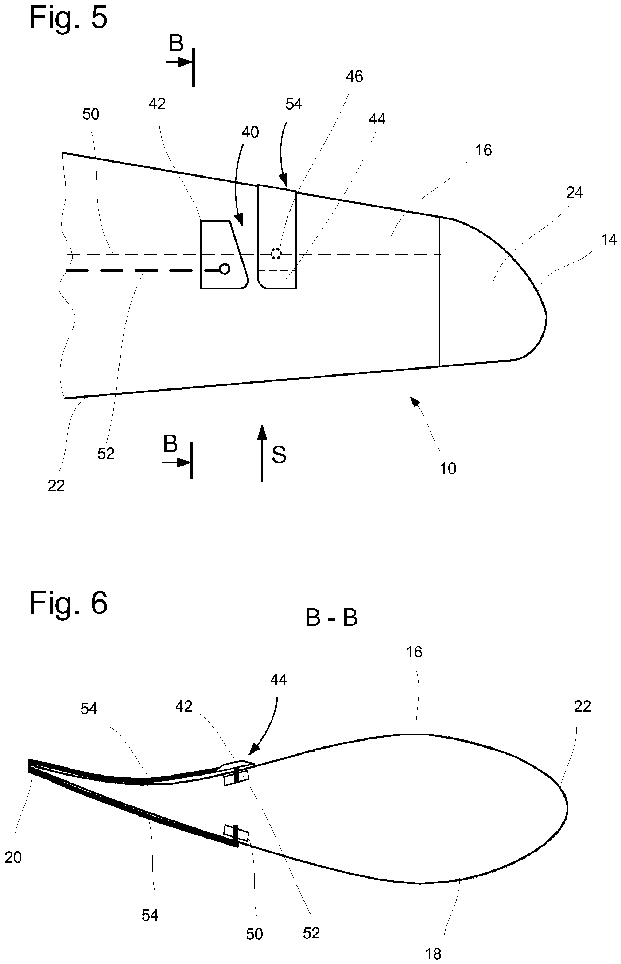

Die Figur 5 zeigt in einer schematischen Darstellung den blattspitzennahen Bereich eines weiteren, erfindungsgemäßen Windenergieanlagenrotorblatts 10 mit Blick auf die Druckseite 16. Es wird von der Profilnasenkante 22 her angeströmt. Die Anströmrichtung S ist durch einen Pfeil gekennzeichnet. Das Windenergieanlagenrotorblatt 10 weist zwei Blitzschutzleiter 50, 52 auf, von denen der erste Blitzschutzleiter 50 auf der Saugseite und der zweite Blitzschutzleiter 52 auf der Druckseite 16 verläuft. Der saugseitige erste Blitzschutzleiter 50 verläuft vom Blitzschutzrezeptor 24 an der Blattspitze 14 über eine Kontaktstelle am saugseitigen Ende der Stromschiene 54 bis zur Blattwurzel. Er stellt somit die Verbindung zwischen der ersten Elektrode (44) und dem Blitzschutzrezeptor (24) her. Der druckseitige Blitzschutzleiter 52 ist mit der zweiten Elektrode 42 auf der Druckseite verbunden.

Die Figur 6 zeigt eine Profilansicht des Windenergieanlagenrotorblatts 10 in der Schnittebene B-B aus der Fig. 5. Auf der Druckseite 16 des Windenergieanlagenrotorblatts 10 befindet sich eine außenliegende Funkenstrecke 40 mit einer ersten Elektrode 44, die verdeckt hinter einer zweiten Elektrode 42 angeordnet ist. Die erste Elektrode 44 ist Teil einer um die Profilendkante 20 des Windenergieanlagenrotorblatts 10 herum verlaufenden Stromschiene 54 und auf der Saugseite 18 über Befestigungsmittel 46 mit dem ersten Blitzschutzleiter 50 verbunden. Die zweite Elektrode 42 ist auf der Druckseite mit dem zweiten Blitzschutzleiter 52, der ein Beispiel einer ersten elektrischen Leitung ist, in Verbindung.

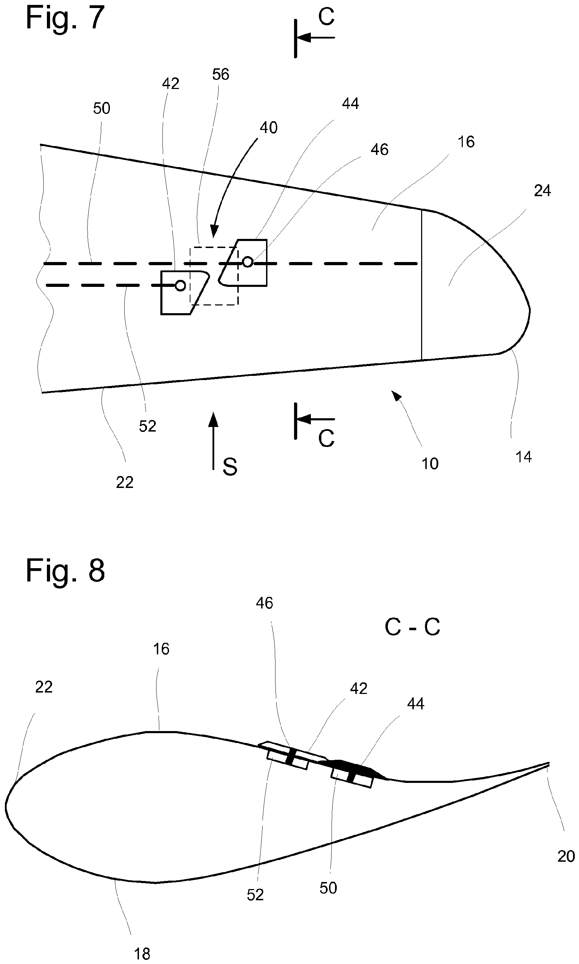

Die Figur 7 zeigt ebenfalls in einer schematischen Darstellung den blattspitzennahen Bereich eines dritten, erfindungsgemäßen Windenergieanlagenrotorblatts 10 mit Blick auf die Druckseite 16. Das Windenergieanlagenrotorblatt 10 wird von der Profilnasenkante 22 her angeströmt. Die Anströmrichtung S ist durch einen Pfeil gekennzeichnet. Das Windenergieanlagenrotorblatt 10 weist zwei Blitzschutzleiter 50, 52 auf, die beide auf der Druckseite 16 im Inneren des Windenergieanlagenrotorblatts 10 verlaufen. Der erste Blitzschutzleiter 50 verläuft bis zum Blitzschutzrezeptor 24 an der Blattspitze 14 und verbindet somit die erste Elektrode 44 mit dem Blitzschutzrezeptor 24. Die Blitzschutzleiter 50, 52 sind jeweils mit einer Elektrode 42, 44 über Befestigungsmittel 46 verbunden. Die Elektroden 42, 44 sind entsprechend der Ausführungsform nach Figur 2c angeordnet.

Auch in der Figur 7 weist ein Oberflächenbereich 56 des Windenergieanlagenrotorblatts 10, in dem die beiden Elektroden angeordnet sind, eine hitzebeständige Beschichtung auf.

In der Figur 8 ist ein Schnitt durch das Windenergieanlagenrotorblatt 10 aus Fig. 7 in der Ebene C-C dargestellt. Man erkennt, dass sich erste Elektrode 44 und zweite Elektrode 42 teilweise überlappen.

### Liste der verwendeten Bezugszeichen:

- 10: Windenergieanlagenrotorblatt
- 12: Blattwurzel
- 14: Blattspitze
- 16: Druckseite
- 18: Saugseite
- 20: Profilendkante
- 22: Profilnasenkante
- 24: Blitzschutzrezeptor
- 26: Blitzschutzleiter
- 28: Stromversorgungskabel
- 29: Stromversorgungskabel
- 30: Heizeinrichtung
- 32: Potentialausgleichsverbindung
- 34: Funkenstrecke
- 40: außen liegende Funkenstrecke
- 42: zweite Elektrode
- 44: erste Elektrode
- 45: Bohrung
- 46: Befestigungsmittel
- 47: erstes Verbindungskabel
- 48: zweites Verbindungskabel
- 50: erster Blitzschutzleiter
- 52: zweiter Blitzschutzleiter
- 54: Stromschiene
- 56: Oberflächenbereich mit Beschichtung
- S: Anströmrichtung
- X: Abstand

## Patentansprüche

1. Windenergieanlagenrotorblatt (10) mit einem Blitzschutzrezeptor (24), einer ersten elektrischen Leitung und einer Potentialausgleichseinrichtung, die eine erste Elektrode (44), die mit dem Blitzschutzrezeptor (24) verbunden ist, und eine zweite Elektrode (42), die mit der ersten elektrischen Leitung verbunden ist, aufweist, wobei zwischen den beiden Elektroden (42, 44) eine Funkenstrecke (40) ausgebildet ist, **dadurch gekennzeichnet, dass** einander zugewandte Seiten der beiden Elektroden (42, 44) einen Strömungskanal bilden, der so angeordnet ist, dass er von der im Betrieb des Windenergieanlagenrotorblatts (10) anströmenden Umgebungsluft durchströmt wird.

2. Windenergieanlagenrotorblatt (10) nach Anspruch 1, **dadurch gekennzeichnet, dass** der Strömungskanal an einer der anströmenden Umgebungsluft ausgesetzten Außenseite des Windenergieanlagenrotorblatts (10) angeordnet ist.

3. Windenergieanlagenrotorblatt (10) nach Anspruch 1 oder 2, **dadurch gekennzeichnet, dass** der Strömungskanal an einer Druckseite (16) des Windenergieanlagenrotorblatts (10) angeordnet ist.

4. Windenergieanlagenrotorblatt (10) nach einem der Ansprüche 1 bis 3, **dadurch gekennzeichnet, dass** der Strömungskanal eine Längsrichtung aufweist, die in Richtung der anströmenden Umgebungsluft ausgerichtet ist.

5. Windenergieanlagenrotorblatt (10) nach einem der Ansprüche 1 bis 4, **dadurch gekennzeichnet, dass** sich der Strömungskanal in Richtung der ihn durchströmenden Luft aufweitet.

6. Windenergieanlagenrotorblatt (10) nach einem der Ansprüche 1 bis 5, **dadurch gekennzeichnet, dass** die erste Elektrode (44) und/oder die zweite Elektrode (42) eine scheibenförmige Grundform aufweisen.

7. Windenergieanlagenrotorblatt (10) nach einem der Ansprüche 1 bis 6, **dadurch gekennzeichnet, dass** die erste Elektrode (44) und/oder die zweite Elektrode (42) eine an der Außenseite des Windenergieanlagenrotorblatts (10) anliegende Unterseite und eine oder mehrere, relativ zu der Unterseite schräg angeordnete Seitenflächen aufweisen.

8. Windenergieanlagenrotorblatt (10) nach einem der Ansprüche 1 bis 7, **dadurch gekennzeichnet, dass** das Windenergieanlagenrotorblatt (10) eine elektrische Heizeinrichtung (30) aufweist und die erste elektrische Leitung eine Versorgungsleitung ist, über die die elektrische Heizeinrichtung (30) mit einem Heizstrom versorgt werden kann.

9. Windenergieanlagenrotorblatt (10) nach einem der Ansprüche 1 bis 8, **dadurch gekennzeichnet, dass** das Windenergieanlagenrotorblatt (10) einen Blitzschutzleiter (26) aufweist, der mit dem Blitzschutzrezeptor (24) verbunden ist und zu einer Blattwurzel (12) führt.

10. Windenergieanlagenrotorblatt (10) nach Anspruch 9, **dadurch gekennzeichnet, dass** der Blitzschutzleiter (26) an der Saugseite (18) des Windenergieanlagenrotorblatts (10) angeordnet ist und mit der ersten Elektrode (44) über ein im Inneren des Windenergieanlagenrotorblatts (10) angeordnetes, elektrisches Verbindungsstück, das von der Saugseite (18) zu der ersten Elektrode (44) führt, verbunden ist.

11. Windenergieanlagenrotorblatt (10) nach Anspruch 9, **dadurch gekennzeichnet, dass** der Blitzschutzleiter (26) an der Saugseite (18) des Windenergieanlagenrotorblatts (10) angeordnet ist und mit der ersten Elektrode (44) über eine an der Außenseite des Windenergieanlagenrotorblatts (10) angeordnete Stromschiene (54) verbunden ist.

12. Windenergieanlagenrotorblatt (10) nach Anspruch 11, **dadurch gekennzeichnet, dass** die Stromschiene (54) um eine Profilendkante (20) des Windenergieanlagenrotorblatts (10) herumgeführt ist.

13. Windenergieanlagenrotorblatt (10) nach Anspruch 11 oder 12, **dadurch gekennzeichnet, dass** die erste Elektrode (44) von einem von dem Blitzschutzleiter (26) entfernten Ende der Stromschiene (54) gebildet ist.

14. Windenergieanlagenrotorblatt (10) nach einem der Ansprüche 1 bis 13, **dadurch gekennzeichnet, dass** ein Oberflächenbereich (56) an der Außenseite des Windenergieanlagenrotorblatts (10), in dem die beiden Elektroden angeordnet sind, mit einer hitzebeständigen Beschichtung versehen ist.

## Claims

1. A wind turbine rotor blade (10), having a lightning receptor (24), a first electric line, and a potential equalization means having a first electrode (44), which is connected to the lightning receptor (24), and a second electrode (42), which is connected to the first electric line, a spark gap (40) being realized between the two electrodes (42, 44), wherein mutually facing sides of the two electrodes (42, 44) form a flow channel, which is disposed such that the ambient air that is incident when the wind turbine rotor blade (10) is in operation flows through it.

2. The wind turbine rotor blade (10) as claimed in claim 1, wherein the flow channel is disposed on an exterior of the wind turbine rotor blade (10) that is exposed to the incident ambient air.

3. The wind turbine rotor blade (10) as claimed in claim 1 or 2, wherein the flow channel is disposed on a pressure side (16) of the wind turbine rotor blade (10).

4. The wind turbine rotor blade (10) as claimed in any one of claims 1 to 3, wherein the flow channel has a longitudinal direction that is oriented in the direction of the incident ambient air.

5. The wind turbine rotor blade (10) as claimed in any one of claims 1 to 4, wherein the flow channel widens in the direction of the air flowing through it.

6. The wind turbine rotor blade (10) as claimed in any one of claims 1 to 5, wherein the first electrode (44) and/or the second electrode (42) have the basic shape of a disk.

7. The wind turbine rotor blade (10) as claimed in any one of claims 1 to 6, wherein the first electrode (44) and/or the second electrode (42) have an underside that bears against the exterior of the wind turbine rotor blade (10), and have one or more lateral faces disposed obliquely relative to the underside.

8. The wind turbine rotor blade (10) as claimed in any one of claims 1 to 7, wherein the wind turbine rotor blade (10) has an electric heating device (30), and the first electric line is a supply line, via which the electric heating device (30) can be supplied with a heating current.

9. The wind turbine rotor blade (10) as claimed in any one of claims 1 to 8, wherein the wind turbine rotor blade (10) has a lightning conductor (26), which is connected to the lightning receptor (24) and leads to a blade root (12).

10. The wind turbine rotor blade (10) as claimed in claim 9, wherein the lightning conductor (26) is disposed on the suction side (18) of the wind turbine rotor blade (10), and is connected to the first electrode (44) via an electric connecting piece that is disposed inside the wind turbine rotor blade (10) and that leads from the suction side (18) to the first electrode (44).

11. The wind turbine rotor blade (10) as claimed in claim 9, wherein the lightning conductor (26) is disposed on the suction side (18) of the wind turbine rotor blade (10), and is connected to the first electrode (44) via a busbar (54) disposed on the exterior of the wind turbine rotor blade (10).

12. The wind turbine rotor blade (10) as claimed in claim 11, wherein the busbar (54) is routed around a profile trailing edge (20) of the wind turbine rotor blade (10).

13. The wind turbine rotor blade (10) as claimed in claim 11 or 12, wherein the first electrode (44) is constituted by an end of the busbar (54) that is at a distance from the lightning conductor (26).

14. The wind turbine rotor blade (10) as claimed in any one of claims 1 to 13, wherein a surface region (56) on the exterior of the wind turbine rotor blade (10), in which the two electrodes are disposed, is provided with a heat-resistant coating.

## Revendications

1. Pale de rotor d'éolienne (10) avec un récepteur de protection contre la foudre (24), une première ligne électrique et un dispositif de compensation de potentiel qui présente une première électrode (44) qui est reliée au récepteur de protection contre la foudre (24) et une seconde électrode (42) qui est reliée à la première ligne électrique, dans laquelle un éclateur à étincelle (40) est réalisé entre les deux électrodes (42, 44), **caractérisée en ce que** des côtés des deux électrodes (42, 44) tournés l'un vers l'autre forment un canal d'écoulement qui est disposé de sorte qu'il est parcouru par l'air environnant entrant lors du fonctionnement de la pale de rotor d'éolienne (10).

2. Pale de rotor d'éolienne (10) selon la revendication 1, **caractérisée en ce que** le canal d'écoulement est disposé sur un côté externe de la pale de rotor d'éolienne (10) exposé à l'air environnant entrant.

3. Pale de rotor d'éolienne (10) selon la revendication 1 ou 2, **caractérisée en ce que** le canal d'écoulement est disposé sur un côté de pression (16) de la pale de rotor d'éolienne (10).

4. Pale de rotor d'éolienne (10) selon une des revendications 1 à 3, **caractérisée en ce que** le canal d'écoulement présente une direction longitudinale qui est orientée en direction de l'air environnant entrant.

5. Pale de rotor d'éolienne (10) selon une des revendications 1 à 4, **caractérisée en ce que** le canal d'écoulement s'élargit en direction de l'air le parcourant.

6. Pale de rotor d'éolienne (10) selon une des revendications 1 à 5, **caractérisée en ce que** la première électrode (44) et/ou la seconde électrode (42) présentent une forme de base en forme de disque.

7. Pale de rotor d'éolienne (10) selon une des revendications 1 à 6, **caractérisée en ce que** la première électrode (44) et/ou la seconde électrode (42) présentent un côté inférieur adjacent au côté externe de la pale de rotor d'éolienne (10) et une ou plusieurs faces latérales disposées en biais par rapport au côté inférieur.

8. Pale de rotor d'éolienne (10) selon une des revendications 1 à 7, **caractérisée en ce que** la pale de rotor d'éolienne (10) présente un dispositif de chauffage électrique (30) et la première ligne électrique est une ligne d'alimentation par le biais de laquelle le dispositif de chauffage électrique (30) peut être alimenté avec un courant de chauffage.

9. Pale de rotor d'éolienne (10) selon une des revendications 1 à 8, **caractérisée en ce que** la pale de rotor d'éolienne (10) présente un conducteur de protection contre la foudre (26) qui est relié au récepteur de protection contre la foudre (24) et conduit à un pied de pale (12).

10. Pale de rotor d'éolienne (10) selon la revendication 9, **caractérisée en ce que** le conducteur de protection contre la foudre (26) est disposé sur le côté d'aspiration (18) de la pale de rotor d'éolienne (10) et est relié à la première électrode (44) par le biais d'une pièce de connexion électrique, disposée à l'intérieur de la pale de rotor d'éolienne (10), qui conduit du côté d'aspiration (18) à la première électrode (44).

11. Pale de rotor d'éolienne (10) selon la revendication 9, **caractérisée en ce que** le conducteur de protection contre la foudre (26) est disposé sur le côté d'aspiration (18) de la pale de rotor d'éolienne (10) et est relié à la première électrode (44) par le biais d'une barre conductrice (54) disposée sur le côté externe de la pale de rotor d'éolienne (10).

12. Pale de rotor d'éolienne (10) selon la revendication 11, **caractérisée en ce que** la barre conductrice (54) est guidée autour d'une arête d'extrémité de profil (20) de la pale de rotor d'éolienne (10).

13. Pale de rotor d'éolienne (10) selon la revendication 11 ou 12, **caractérisée en ce que** la première électrode (44) est formée par une extrémité de la barre conductrice (54) éloignée du conducteur de protection contre la foudre (26).

14. Pale de rotor d'éolienne (10) selon une des revendications 1 à 13, **caractérisée en ce qu'**une région superficielle (56) sur le côté externe de la pale de rotor d'éolienne (10) dans laquelle les deux électrodes sont disposées est pourvue d'un revêtement thermorésistant.
